# EUROPEAN PATENT APPLICATION

(11) **EP 0 960 861 A1**
(43) Date of publication of application: **01.12.1999**
(21) Application number: 98830322.8
(22) Date of filing: 26.05.1998
(51) Int. Cl.: C02F 11/00, C02F 11/14

(54) **Process for treating sludges obtained from the purification of industrial effluent**

(71) Applicant: Termomeccanica S.p.A., 19126 La Spezia (IT)
(72) Inventor: Sammartano, Aldo, 19032 Lerici - La Spezia (IT)
(74) Representative: Ferreccio, Rinaldo

(57) **Abstract**

Process for treating sludges obtained from industrial, agricultural and/or civil effluent purification plants, characterized in that it comprises the stages of:
- mixing the said sludges with an amount, ranging from 3.5 to 35% by weight of the sludges to be treated, of a mixture comprising from 50 to 100% by weight of quicklime, from 0 to 50% by weight of cement and from 0 to 50% by weight of gypsum, to obtain a blend;
- crumbling this blend and making it homogeneous;
- aerating and maturing the blend until the quicklime has reacted completely with the sludges.

## Description

The present invention relates to a novel process for treating sludges obtained from industrial, agricultural and/or civil effluent purification plants.

More precisely, the present invention relates to a novel process for treating sludges obtained from the above-mentioned purification plants, based on the inertization of the harmful substances contained therein.

It is known that pre-concentrated sludges obtained from the purification plants of industrial, agricultural and/or civil facilities are generally transported directly to a dumping site and only a small portion of these sludges are reused in a furnace for the production of building materials, and only when their chemical composition permits this.

However, in recent years, processes have been developed based on the inertization of the harmful substances contained in these sludges. With this aim, cement, fly ash and optionally water are added to these sludges, in a total amount of up to 70% by weight relative to the weight of material to be treated, and the mixture thus obtained is mixed until a very dense paste is obtained, which is transported and spread on the bed of a dumping site. During this stage, a paste setting reaction begins, and ends only when the paste has been deposited at the dumping site, thus giving rise to a solid, inert covering sheet.

However, these processes have the drawback of being relatively expensive since they require large amounts of additives (65-70% by weight relative to the weight of the sludges to be treated). The material obtained is in the form of a very dense paste, which can be used only for daily spreading over dumping sites. This paste must also be transported from the mixing machine to the dumping site relatively quickly and, in any case, before the degree of setting of the paste has reached a point at which it is no longer possible to transfer it from the transportation containers to the bed of the dumping site (about 24 hours). This problem becomes particularly serious when the sludge processing plant is far from the dumping site, since the time available to transport the material may prove to be insufficient.

The problem addressed by the present invention is thus to provide a novel process for treating sludges, based on the inertization of the harmful substances contained therein, which overcomes the above-mentioned problems.

The problem is solved, according to the invention, by a process for treating sludges obtained from industrial, agricultural and/or civil effluent purification plants, characterized in that it comprises the stages of:
- mixing the said sludges with an amount, ranging from 3.5 to 35% (by weight of the sludges to be treated), of a mixture comprising from 50 to 100% by weight of quicklime, from 0 to 50% by weight of cement and from 0 to 50% by weight of gypsum, to obtain a blend;
- crumbling the said blend and making it homogeneous; and
- aerating and maturing the said blend until the quicklime has reacted completely with the said sludges.

The process according to the present invention makes it possible to treat sludges obtained from purification plants by converting them, via reaction with quicklime, into inert, solid compounds.

These sludges generally have a moisture content ranging between 50 and 75% by weight.

Quicklime is an anhydrous compound which, in the presence of water, becomes hydrated with consequent hardening and solidification. Thus, by using quicklime the setting reaction is slowly initiated, thus allowing the harmful elements contained in the sludge to be encased and set in a stable manner. This process takes place via a plurality of neutralization, precipitation, absorption, complexation and solidification reactions. The combination of these reactions gives the final product stability and density, thus impeding the release of the harmful elements contained therein.

The process according to the present invention thus makes it possible to recover the residual sludges obtained from the filter presses of purification plants, giving an odourless, stable, unputrefiable product which does not constitute a danger to human health or to the environment. By virtue of the crumbling and the addition of lime, the product obtained acquires the typical consistency of soil, which can then be stored, transported and dumped in any place and at any time, without giving rise to the abovementioned problems of the prior art.

The process according to the present invention makes it possible to treat sludges obtained from plants for the purification of galvanic, metallurgical and mechanical industry effluent waters containing hydroxides of heavy metals and other toxic elements; sludges obtained from plants for the purification of civil effluent waters or mixed industrial and civil effluent waters, containing organic and colloidal substances together with heavy metals; sludges obtained from painting plants; organic substances such as tars, aldehydes, ketones, phenols, etc.; stripping baths formed of acidic and basic solutions containing heavy metals, phosphates, sulphates and other toxic substances; baths containing chromates in trivalent form; salts such as sulphites, nitrites, nitrates, etc.

The product obtained by the process according to the present invention can be reused in the industrial field, for example in cement factories, furnaces (manufacture of bricks), as tiles and the like, for environmental renovation, for example for filling in disused quarries, or in dumping sites as daily covering soil.

Taking into account the chemical properties and the content of metal elements present in the sludges to be treated, the inertization process is initiated by measuring out the various components of the mixture (reactive agents) in predetermined doses evaluated by means of laboratory tests. These tests also make it possible to determine the specific parameters for optimum functioning of the process, such as, for example, the reaction times, the mixing power, the loading times, the dosage percentages in the mixture of reactive agents, etc., in order to optimize the quality of the final product as a function of the starting material and of the specific use for which it is intended.

The stage of crumbling of the compound obtained by mixing the sludges with the activator is necessary in order to grind any lumps or pieces of sludge which have not been able to amalgamate intimately with the other components in the preceding mixing stage, thus obtaining a friable, homogeneous and chemically inert final product which is thus easy to handle in the subsequent processing stages. The crumbling also allows an adequate oxygenation of the bulk, thus helping the specific inertization reactions to go to completion and helping to remove gaseous substances and odours.

By virtue of the high degree of mixing obtained by means of the crumbling operation, and thus the large surface area for exchange between the sludge and the said mixture, it is possible to decrease substantially the amount of this mixture requiring to be mixed with the sludges to be treated. The crumbling operation which takes place after the mixing stage thus makes the process economically much more advantageous, by lowering the production costs of the treated material.

The use of lime gives the final product a certain amount of friability, thus making it acquire the typical consistency of a soil. Using lime has the further advantage of producing a sterile product since, by being subjected to slow baking of its organic parts, the product is preserved from any bacterial fermentation. This baking is made possible by the high exothermicity of the reactions which take place between the lime and the sludges to be treated.

The composition of the mixture is chosen according to the type of future application of the product.

For the manufacture of bricks, a mixture comprising lime and gypsum is used, for example; in this way, during firing in a furnace, the emissions of odours are reduced considerably and ammonia is retained.

Particularly for products intended for firing in a furnace, a particularly preferred embodiment of the present invention makes provision for the mixture comprising lime to contain zeolites in amounts less than or equal to 6% by weight relative to the total weight of the mixture. The reason for this is that these materials have the capacity to absorb ammonia, thus almost completely eliminating the emission of unpleasant odours during the stage in which the material is fired.

For use in dumping sites and for renovation of the environment it is possible, however, to use lime alone or mixed in large amounts with the other components, since a high friability of the product is desired for this type of application.

A further aspect of the present invention envisages carrying out the stage of mixing of the said sludges with the said mixture in a horizontal mixing machine, of batchwise type, having two horizontal shafts on which are mounted mixing arms.

The batchwise process envisages, for each treatment cycle, introduction of the weighed feed stock of the mixture into the mixing machine, as a function of the amount (also weighed) of sludge to be treated.

The total amount of mixture to be mixed with the sludge varies depending on the water content of this sludge; however, this amount remains within the range between 3.5 and 35% by weight relative to the weight of the sludges to be treated. In a particularly advantageous embodiment, the amount of mixture added to the sludge ranges between 5 and 20% by weight relative to the weight of the sludges to be treated and the quicklime is added in an amount not less than 3.5% by weight relative to the weight of the sludges to be treated.

The contact times between the sludges and the mixture in the mixing machine range from 30 to 120 s, depending on the case, so as to ensure intimate contact and, at the same time, to avoid too sudden a development of the exothermic hydration reactions. The temperature in the mixing machine can rise to a maximum of 35°C.

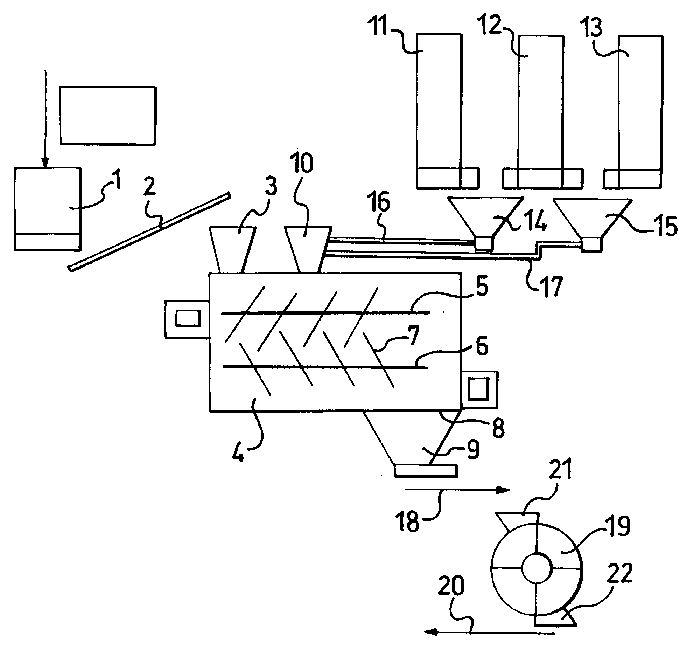

In order that the invention may be understood more clearly, a preferred embodiment thereof will now be described, by way of non-limiting example, with reference to the attached figure.

The sludges obtained from industrial purification plants are collected in a hopper 1, complete with a base equipped with extraction screws. Under the hopper 1 are placed electronic compression load cells, which are connected to a digital display on an electrical general control panel, for constant monitoring of the amount of sludge fed into the subsequent processing units.

The sludge leaving the extraction screws is emptied onto a conveyor belt 2 and is thereby transferred into a sludge transportation hopper 3 which is fitted to the inlet of a mixing machine 4 and is fitted with a bottom gate, electrically controlled by a pneumatic cylinder, for complete closure of the mixing machine 4.

The sludge contained in the hopper 3 is then transferred into the mixing machine 4, in which it is brought into contact and mixed with a mixture of reactive agents obtained from a storage and metering unit which will be described later.

The mixing machine 4 comprises an internal tank in which are positioned two main horizontal shafts 5, 6 driven by geared motors. Arms 7 fitted with paddles (not shown) for mixing the sludge with the mixture of reactive agents are mounted on the shafts 5, 6.

The internal tank of the mixing machine 4 is lined with removable panels made of wear-resistant material and comprises atomizer nozzles for supplying the water required for the hydration reactions which take place during the mixing stage, and a lower drainage hole 8, actuated by an electro-hydraulic cylinder and fitted with a manual pump for emergency drainage. The mixing machine 4 is also equipped with a system for automatic washing of the internal tank, comprising two traversing pipes installed above the tank itself, complete with conical spray nozzles, and connected to a piston pump.

The mixing machine 4 is equipped with a hopper 9 placed under the hole 8.

The storage and metering unit for the mixture of reactive agents comprises a plurality of silos - a total of three in the example, identified by the numbers 11, 12, 13 - in the form of vertical cylinders with a flat base. The silos 11, 12, 13 each have a filling pipe, a manual drainage throttle valve, a fluidisation system, minimum and maximum level indicators, a safety valve, a dust filter and a rotating-beam base extractor with a central conical baffle and a helical drainage screw. Downstream of the silos 11, 12, 13 are located two metering devices 14, 15, each of which has a top loading entrance (screw), for receiving the mixture of reactive agents from the silos 11, 12, 13, and a bottom drainage rotary trap for measuring out the mixture of reactive agents weighed on respective conveyor belts 16, 17, for its transfer into the hopper 10 for feeding the mixture into the mixing machine 4. The metering devices 14, 15 also comprise an electric vibrator, a fluidisation system with strong plates and a weighing system with electronic load cells connected to the general electrical control panel.

After the mixing stage, the product obtained is expelled from the mixing machine 4 through the drainage hole 8 and is then conveyed, via a conveyor belt 18, to a crumbling unit 19. This unit comprises a mill with moving blades, actuated by an electric motor, a hopper 21 for loading the material from the conveyor belt 18 into the mill, and a hopper 22 for emptying the crumbled product from the mill onto a conveyor belt 20. In the crumbling unit, the material is crumbled until uniform granules are obtained, which are finally transported, via the conveyor belt 20, into holding and storage tanks for the final maturation.

The finished product can then be used for the above-mentioned purposes.

The embodiment described above also comprises a system for processing the air withdrawn from the hopper 1, from the mixing machine 4 and from the tanks for holding and storing the finished product; this system includes a damping system with re-circulation of sodium hydroxide, oxygenated water and sulphuric acid in special washing towers.

### Example 1: Treatment of sludges intended for reuse (brick factories)

5000 kg of sludges obtained from civil-industrial effluent processing plants in a leather-working area are loaded into the plant described above; the mixing machine has a total volume of 8.5 m³ and a working volume of 6.0 m³.

The sludges to be treated were pre-concentrated by a filter press with chambers and were in the form of broken black panels of various shapes and sizes. Their moisture content is about 63% by weight.

The mixture of reactive agents (1000 kg) consists of lime (500 kg) and gypsum (500 kg).

The contact and mixing time of the sludge/mixture of reactive agents in the mixing machine 4 is set at 40 s. The maximum temperature which the sludge/mixture of reactive agents reaches is between 25 and 35°C.

The product is then crumbled, at a blade spin speed of 1400 revolutions/min and a friable final product is thus obtained, characterized by a residual moisture content in the range between 40 and 45%, a uniform particle size, a light brownish colour and a temperature inside the bulk of 40-50°C which, over 24 hours, causes slow baking of the product, thus protecting it against any future bacterial fermentation.

### Example 2: Treatment of sludges for dumping

5000 kg of sludges obtained from civil-industrial effluent processing plants in a leather-working area are loaded into the plant described above; the mixing machine has a total volume of 8.5 m³ and a working volume of 6.0 m³.

The sludges to be treated were pre-concentrated by a filter press with chambers and were in the form of broken black panels of various shapes and sizes. Their moisture content is about 58% by weight.

The mixture of reactive agents (650 kg) consists of lime (455 kg) and Portland cement (195 kg).

The contact and mixing time of the sludge/mixture of reactive agents in the mixing machine 4 is set at 70 s. The maximum temperature which the sludge/mixture of reactive agents reaches is between 35 and 45°C.

The product is then crumbled, and a friable final product is thus obtained, characterized by a residual moisture content in the range between 36 and 45%, a uniform particle size, a dark brownish colour and a temperature inside the bulk of 60-70°C which, over 24 hours, causes slow baking of the product, thus protecting it against any future bacterial fermentation.

### Example 3: Treatment of sludges for dumping

5000 kg of sludges obtained from civil-industrial effluent processing plants in a leather-working area are loaded into the plant described above; the mixing machine has a total volume of 8.5 m³ and a working volume of 6.0 m³.

The sludges to be treated were pre-concentrated by a filter press with chambers and were in the form of broken black panels of various shapes and sizes. Their moisture content is about 55% by weight.

The mixture of reactive agents (350 kg) consists of lime (315 kg) and Portland cement (35 kg).

The contact and mixing time of the sludge/mixture of reactive agents in the mixing machine 4 is set at 70 s. The maximum temperature which the sludge/mixture of reactive agents reaches is about 35°C.

The product is then crumbled, and a friable final product is thus obtained, characterized by a residual moisture content in the range between 40 and 45%, a uniform particle size, a dark brownish colour and a temperature inside the bulk of 60-70°C which, over 24 hours, causes slow baking of the product, thus protecting it against any future bacterial fermentation.

### Example 4: Treatment of sludges intended for reuse (brick factories)

5000 kg of sludges obtained from civil-industrial effluent processing plants in a leather-working area are loaded into the plant described above; the mixing machine has a total volume of 8.5 m³ and a working volume of 6.0 m³.

The sludges to be treated were pre-concentrated by a filter press with chambers and were in the form of broken black panels of various shapes and sizes. Their moisture content is about 63% by weight.

The mixture of reactive agents (1400 kg) consists of lime (700 kg), gypsum (210 kg), cement (420 kg) and zeolite A in acidic form (70 kg).

The contact and mixing time of the sludge/mixture of reactive agents in the mixing machine 4 is set at 40 s. The maximum temperature which the sludge/mixture of reactive agents reaches is between 25 and 35°C.

The product is then crumbled, at a blade spin speed of 1400 revolutions/min and a friable final product is thus obtained, characterized by a residual moisture content in the range between 40 and 45%, a uniform particle size, a light brownish colour and a temperature inside the bulk of 40-50°C which, over 24 hours, causes slow baking of the product, thus protecting it against any future bacterial fermentation.

## Claims

1. Process for treating sludges obtained from industrial, agricultural and/or civil effluent purification plants, characterized in that it comprises the stages of:
- mixing the said sludges with an amount, ranging from 3.5 to 35% by weight of the sludges to be treated, of a mixture comprising from 50 to 100% by weight of quicklime, from 0 to 50% by weight of cement and from 0 to 50% by weight of gypsum, to obtain a blend;
- crumbling the said blend and making it homogeneous; and
- aerating and maturing the said blend until the quicklime has reacted completely with the said sludges.

2. Process according to Claim 1, in which the said blend is mixed with the said sludges in an amount ranging from 5 to 20% by weight of the sludges to be treated.

3. Process according to Claim 2, in which an amount of lime of not less than 3.5% by weight relative to the weight of the sludges to be treated is used.

4. Process according to any one of the preceding claims, in which the said mixture contains zeolites in an amount less than or equal to 6% by weight relative to the total weight of the mixture.

5. Process according to any one of the preceding claims, in which the stage of mixing of the said sludges with the said mixture is carried out by means of a horizontal mixing machine (4), of batchwise type, having two horizontal shafts (5, 6) on which are mounted mixing arms (7).

6. Process according to any one of the preceding claims, in which the said stage of crumbling and aeration of the product is carried out in a crumbling unit (19) comprising a mill with moving blades.

7. Use of a product as a starting material in the manufacture of a building material, the said product being obtained by the process described in any one of Claims 1 to 5.

8. Use of a product as a material for daily spreading on dumping sites and/or for environmental renovation, the said product being obtained by the process described in any one of Claims 1 to 5.
